# EUROPEAN PATENT APPLICATION

(11) **EP 2 259 180 A1**
(43) Date of publication of application: **08.12.2010**
(21) Application number: 10004760.4
(22) Date of filing: 05.05.2010
(51) Int. Cl.: G06F 9/44

(54) **Re-engineering of computer source code**

(30) Priority: 03.06.2009 IE 20090437
(71) Applicant: Port Vines Research Ltd, Dublin 2 (IE)
(72) Inventor: O'Dunlaing, Ceall, Dublin 6 (IE); Walsh, Brian, Dublin 2 (IE)
(74) Representative: Boyce, Conor

(57) **Abstract**

A mechanism for re-engineering computer source code to enable porting of the code from a desktop execution platform to a web execution platform is disclosed. The mechanism is embodied in a software tool that comprising: a code analysis engine that is operative to analyse the source code of a desktop application and identify features within the code, and a code generation engine operative to generate code for a web application that implements functionality equivalent to that of the desktop application. The analysis engine is operative to identify UI code that creates a blocking interaction with a user. The code generation engine operates to create equivalent code segmented into two code blocks, a first code block being operative to create an input UI object and the second block being operative to continue program execution following user interaction with the UI object.

## Description

This invention relates to re-engineering of computer source code, and in particular to re-engineering of code to allow it to operate on diverse alternative execution platforms.

A well-known problem that is regularly encountered by practitioners in computer science is that of adapting code that has been created for execution on one platform so that it can execute on another platform without completely re-writing the code. This is generally referred to as "porting".

There has been a trend that has seen applications that have been traditionally executed on a stand-alone computer (so-called "desktop" applications) migrate to a web-based model, where a web application is executed by a central server computer, such as a web server, and the user interacts with the application through a web browser that executes on their local computer. The local computer is normally connected to the server over a wide-area network, such as the Internet or a local-area network. This model can offer both the user and the provider of the software several advantages. These include:
- access to the application is independent of the user's operating system and hardware;
- support for distributed computing and data centres, where the end user is not physically located near to the location of the servers;
- support for a 'Software-as-a-Service' (SaaS) business model that allows software companies to provide application hosting, rather than simply providing the application software and requiring customers to host the application; and
- saving in cost resulting from reduced implementation overheads because the software is easier to deploy and update.

Clearly, it would be advantageous if it were possible to re-use code from existing, desktop applications in the creation of web applications. This can save costs for the implementer and provide familiarity for the users. However, presently it is generally necessary to rewrite large parts of a desktop application's code. The amount of rewriting depends on how much business logic resides in the user interface (UI) code of the desktop application. At the least, porting will involve rewriting the UI itself to operate using a web interface. Rewriting typically involves considerable code re-engineering and is highly prone to introducing subtle and hard-to-detect bugs into the application. Once the web UI code has been ported, it is no longer compatible with the desktop application. Therefore, there is a increased cost if there is development of the application continues with both interfaces since future UI changes are duplicated in two sets of code.

An aim of this invention is to provide a mechanism, typically in the form of a software tool, whereby the source code of a desktop application can be processed and changes made to the code so that it will operate as a web application with corresponding functionality.

To this end, this invention provides a tool for re-engineering computer source code comprising: a code analysis engine that is operative to analyse the source code of a desktop application and identify features within the code, and a code generation engine operative to generate code for a web application that implements functionality equivalent to that of the desktop application, wherein the analysis engine is operative to identify UI code that creates a blocking interaction with a user and the code generation engine operates to create equivalent code segmented into two code blocks, a first code block being operative to create an input UI object and the second block being operative to continue program execution following user interaction with the UI object.

In the web application, instead of blocking a single thread of execution while a modal dialog is being displayed, control is handed from a first to a second execution thread on completion of user input, and the first thread is terminated.

In many cases, the state of the application when the first thread was terminated will have to be passed to the second code block. Therefore, where appropriate, the first code block includes code that preserves the execution state of the application and the second code block includes code that restores the preserved state of the application.

Typically, the analysis engine applies, in order, plurality of tests to the code, and the operation of the code generation engine is modified in accordance with the results of the tests. These tests may be ordered to ensure that the first test that is met can determine the correct code to be generated.

There are cases where code that generates a dialogue box is executed conditionally. For example, it may be controlled by an IF statement. In such cases, only some paths through the code in the first block will cause the dialogue to be displayed. Therefore, only some paths through the code in the second block will be required to process the result of user interaction. Therefore, the analysis engine advantageously operates to determine whether the UI code that creates a blocking interaction with is executed conditionally, and, if required, causes the code generation engine to create conditionally executed code in the first and second code blocks as required to maintain the functionality of the application.

The analysis engine preferably analyses the code recursively. This ensures that all code relating to relevant UI events is analysed and re-engineered as required.

The tool can be run at any time, meaning that only a single code base for the desktop application need be maintained and developed. Then, when the application is to be deployed as a web application, the tool will carry out the necessary conversion of the source code.

An embodiment of the invention will now be described in detail, by way of example, and with reference to the accompanying drawings, in which:
Figure 1 shows a simplified example of a desktop with business logic that requests users input application module prior to conversion in accordance with the invention;
Figure 2 shows the module of Figure 1 converted to three separate business logic modules with no inter-process user requests; and
Figures 3 and 4 are first and second conversion matrices created by an embodiment of the invention during code conversion.

This embodiment of the invention is constituted by a software tool that can be executed on a developer's computer to process the code for the user interface of a desktop application to generate code that will implement the user interface of a web application.

The software tool comprises an analysis engine and a code generation engine. Source code of a desktop application is fed to the software tool, where it is scanned and analysed by the analysis engine, the aim being to identify specific features of the source code, as will be described.

The code generation creates an output that is code which can be compiled or interpreted as a web application that performs the same functions as the desktop application. For much of the code, such as that responsible for implementing the business logic of the application, the output code will be the same as the input code. However, where the analysis engine identifies specific features of the source code, the analysis engine will perform transformations on the code to enable it to operate satisfactorily as a web application.

### Outline of the Problems to Solve

There are three major problems that must be addressed in undertaking the task of porting a desktop application to a web application. The first problem relates to the flow of control within code that is associated with the user interface ('UI') of the application. The second problem relates to the operation of shared memory spaces in the web application model. The final problem relates to the conversion of references to desktop operating system UI components within the code into references to compatible web-page UI components.

### The UI flow Problem

The very nature of desktop applications makes them extremely good at identifying and responding to user interaction, such as mouse clicks and the user typing on their keyboard. It is also very easy to control the flow of the application based on these events. In the past, software engineering patterns created a lot of intermingling of the processing or business logic of an application with the code required to support the UI - so called single-tier or dualtier application models. Besides adding a little complexity to the code and making it more difficult to conduct manual testing, this intermingling does not have much impact for normal desktop applications. It was not unreasonable to make an implicit assumption that the application will be able to synchronise execution with user interference by blocking until a user responds.

An example of this is a user interface input dialogue in which when a user activates an 'OK' button, the application processes some business logic based on the values supplied by the user. There may be a point where the business process requests further information from the user, for instance, asking for a decision to be made that requires a "yes" or "no" answer. In a desktop application, such user requests are easily built into the business logic. They are called synchronous processes - that is, the processing of the business logic stops until the user responds to the request that has been presented.

Web applications cannot implement these inter-process requests because in the web paradigm processes are asynchronous. That is, a web application can easily present a user with a second screen mid-way through a processes, but it is not possible to stop the original process from continuing. Furthermore, a web page (a first screen) can never know about the contents of another web page (a second screen). Therefore, the UI must be split into at least two UI elements - a first to request information and process up to the point of a use making a response, and a second UI element to handle subsequent processing. In the context of this invention, this is referred to as 'segmentation' and it is described in detail below.

The software tool embodying the invention operates to segment the code logic at each point where a user is required to interact with the application where those interactions will affect the flow of the application. The tool makes a new point of entry into the program at the place of segmentation so that when the user makes his/her decision and transmits this back to the server, the server restarts execution at this new point of entry. This is equivalent to turning an asynchronous process into a synchronous one.

However, before reaching the point of segmentation, the program was in a certain state and this state muse be recreated when jumping to the new point of entry. Otherwise, there will be inconsistencies between the program flow before segmentation and the flow after. Thus the main steps involved in segmentation are:
1) identify areas where segmentation is required;
2) segment and create a new entry point into the code; and
3) analyse the new segment to determine what parameters are required to retain the state of the application.

It is first necessary to define rules that will identify those parts of the source code at which segmentation is required and implement these in the analysis engine. In simple terms, the areas that need to be addressed in the source code are where a user action can affect the flow of the program.

A first case where this can occur is where a dialog screen is displayed and the user answers a simple single choice question. An example of such a case is where a message pop-up is shown that asks the user to choose 'Yes' or 'No', and the subsequent behaviours of the application is dependent on the choice that the user makes. In this case, the requirement is to segment the program logic immediately after the dialog is displayed to the user, and have the re-entry point resumes execution exactly after this, with the user's answer from the dialog being passed into the resumed program as a parameter.

A second case is where a user is presented with a complex, custom-built dialog, where the code that follows in the calling thread parses data from this dialog. The analysis engine must be sophisticated enough to understand if any data is derived from user interactions, and if any such is derived, to understand exactly what is needed to continue execution in the new segment. The tool will not needlessly segment the code as this will make it less efficient and harder to understand, and it reduces the risk that the tool is not introducing subtle and difficult to find bugs.

The third (and by far the most difficult) case, is where a dialog is shown to the user and processing that is done on this dialog must be completed before returning back to the calling thread. The calling thread does not make direct use of information entered by the user on the dialog screen, so it is not possible to determine whether segmentation is required by analysis of the calling thread. The code associated with the dialog screen itself changes the environment in a way that, if it is not executed in the correct order, erroneous calculations will result.

For example, consider a simple logon dialog, where the user is asked to type in a username and a password and presses an OK button. When the application is first started, the main thread (the calling thread) will instantiate and show the logon dialog, and the calling thread will block until the OK button is pressed: It is the resposibility of code associated with the logon dialog to validate that the correct username and password combination are entered; and then to set up various internal structures, such as a permissions structure, and load any corresponding user data into the process address space. When it has completed all of its tasks, the code associated with the logon dialog returns control to the calling thread, which continues to execute under an implicit assumption that these internal structures have been set up. If these structures are not in place, the application will most likely fail.

To identify areas for segmentation the analysis engine carries out a recursive descent parsing process to analyse the code. The object is to identify all code elements where a dialog box (a request for user feedback) is shown in a blocking manner. That is, where the subsequent code will not be executed until the user has submitted all the information required and closed the dialog box. These are called a modal dialog boxes. At the point of each modal dialog box three tests are carried out by the analysis engine. If any of these tests fail, then there is a requirement to segment the code.

The tool performs an analysis of where the potential point of segmentation lies in relation to the rest of the code. It is possible to write code that shows a modal dialog inside a loop, but this is not usual (it could lead to a never-ending repeat of user requests) and to replicate this in the web paradigm would involve creating multiple threads that subsequently collapsed back to a single thread. The tool will not segment such code and this will be excluded from the following analysis.

Tests that the tool applies to the code will now be described.

Test 1: In the simple case of a single answer style dialog, the tool is operative to determine whether a dialog returns a result to a variable. If it does return a result, it remains only to check that this result is actually used in the code below. As mentioned above, the tool should not unnecessarily segment the code, as this could lead to the code being less efficient and less maintainable. If there is any use of the variable to which the result returned by the dialog is assigned then this test fails. As this is the simplest check, this is be completed first: if there is a need to segment the code, there is no need to carry out further (possibly resource intensive) checks.

Test 2: If Test 1 is passed, the tool checks whether there is a need to segment the code arising from the second case, where data from the dialog window is used in calling thread's code. To determine whether this is the case, the tool looks at the instance variable of the dialog that is being shown, and determines if there are any use of variables from the instance of the dialog after it has been shown. If there are any such uses then the test has failed. It is not enough to simply determine *whether* any variables are used, but rather it is necessary to find *all* variables that are used as these are needed to pass these as parameters to the new entry point.

Test 3: If Tests 1 and 2 are passed then the tool looks for the most complicated third scenario; the code associated with the dialog itself affects the overall state of the application. Since the result of the dialog is not being used (Test 1 passed) and since information entered by the user in the main thread is not used (Test 2 passed) the only way the dialog can affect the state of the application is by affecting a variable with global scope. Thus, this problem is equivalent to identifying whether any variables of global scope are affected by the code associated with the dialog and then determining whether any of these variables are used in the calling thread. If a global variable is affected, but the global variable is not used by the calling thread or any of its descendents, there is no need to segment at this point.

Thus, the variables of interest here fit into three categories: 1) variables declared Public Shared in a class, 2) variables declared in a module, and 3) database fields. Therefore, the tool parses all event handlers and their subordinate functions of the form being shown, and if any of these assign a value to any global variables that are in use in the calling thread, the code is segmented immediately after the point at which the dialog is shown. In this case however, the tracking of which variables are to be modified is not required, as segregating the program here will ensure the code is executed in the correct order, and the new segment will automatically pick up the correct value from the global variable. Here the code is searched to find any manipulation of a global variable that is used by the calling thread, rather than finding and tracking all manipulations.

The action performed by the tool as it segments and creates new entry points will now be described.

The tool completes the three tests above for every place in the source code that a modal dialog is shown. If all three tests are passed, the code is left unaltered as it is not necessary to segment. However, if any of the checks fail, the tool will segment at the point that the modal dialog box is shown and create a new segment containing everything that follows that call.

If it was Test 2 that failed in identifying a piece of code that is to be segmented, there will be some variables returned from the dialog that must be passed to the new segment. Beyond that however, the only requirement is to recreate the application state that existed before the segmentation, when the code jumps into the new segment. What this actually means is that the tool analyses the new segment to identify variables that are being used in the new segment but have been defined in the original segment. These values of these variables are recorded at the point of segmentation, and these values are passed to the new segment when it is executed.

The first thing the tool does is extract the code from the point of segmentation to the end of the method into a new method. If the point of segmentation is located inside a conditional code block, the tool also replicates the conditional logic in the new segment. That is, if the point at which segmentation is going to occur is nested inside one or more 'if' blocks, there are multiple paths through the code that do not involve showing the modal dialog. The tool segments the code while maintaining these other paths, making sure they will be executed correctly. The tool traces back from the point of segmentation and discover all conditional statements that must be true for the point of segmentation to be executed, and these conditional statements are mimicked in the new segment. This means that when the new segment is executed, immediately after the state of the application is reloaded, these conditional statements are executed again to determine which path through the new segment the application should take. (This is called the "conditional code scenario").

When the code has been segmented, the new method is then scanned for any undefined non-global variables. These are variables that are defined in the old method that hold the state of the application. The tool creates new parameters for the new method to pass the program state into the new user interface. If there are any temporary variables defined in this new method (such as variables only used in loops) these are redefined in this new method, as their value from the original method is not needed. Passing the value of the method's local variables to the new segment satisfies the requirement of recreating the state of the application when executing the new segment.

The tool now examines the new method for each of the three segmentation tests to examine whether there is a need to further segment the code. (Thus, the analysis of the code is performed recursively.)

Examples of the above segmentation techniques will now be described with reference to pseudocode.

The first example relates to Test 1. In this example, the user wants to do an FX Trade - they want to buy dollars (USD) with sterling. They enter a USD amount and a Sterling amount and before the application allows the trade to go through, it must check that the implied dollar-sterling FX rate is within reasonable bounds. If there is a greater than 5% difference between the implied FX rate and the latest FX rate that has been stored in the system, the application alerts the user to this being a possible error - perhaps the user pressed the incorrect numbers on the keyboard. The user is are prompted with the warning and asked if the trading process is to continue. Listing 1 below is the original pseudo code from the desktop application (with line numbers).

**Listing 1**

| |
|---|
| 1: ShowDesktopScreen("Ask for a dollar amount to buy [USD Amount] & sterling amount to sell [GBP Amount]. User presses OK to continue") (Upon Pressing OK the FXTransaction Routine is called) |
| 2: Subroutine FXTransaction 'comment: now check the data entered is within 5% of the latest FX rate in the database |
| 3: LastestFXRate = GetLatestFXRateInDatabase |
| 4: If ([USD amount] / [GBP Amount]) > LastestFXRate * 1.05 then |
| 5: ShowDesktopScreen ("Ask the user to verify that it is ok to use a FX rate that is greater than 105% of the latest FX rate. Press OK to continue or Cancel to exit") |
| 6: If CancelPressed then EXIT |
| 7: If ([USD amount] / [GBP Amount]) < LastestFXRate *95 then |
| 8: ShowDesktopScreen("Ask the user to verify that it is ok to use a FX rate that is less than 95% of the latest FX rate. Press OK to continue or Cancel to exit") |
| 9: If CancelPressed then EXIT |
| 10: CreateFXTransaction([USD Amount], [GBP Amount]) |
| 11: END Subroutine |

In this example, the business processing occurs in lines 4, 7 and 10. The code of Listing 1 will fail Test 1. The tool's analysis reveals that on line 5 a simple OK/Cancel dialog box is displayed to the user and the user's choice is stored in the CancelPressed variable which is subsequently used in line 6. This is not a problem for a desktop application. In such an application, when the dialog is shown on line 5, execution of the program will not continue to line 6 until the user has pressed the "OK" or "Cancel" button. As described above, this is not what happens on a web application. In such an application, line 5 would be executed and the dialog displayed to the user. Immediately after this, whether the user has responded or not, line 6 will be executed and the CancelPressed variable will not be dependent on the user's choice. Thus the tool must segment this code at line 5 and again at line 8. The segmented code is shown in Listing 2.

**Listing 2**

| |
|---|
| 1: ShowWebpage("asks for a dollar amount to buy & sterling amount to sell. User presses OK to continue"). (Upon Pressing OK the FXTransaction Routine is called) |
| 2: Subroutine FXTransaction 'comment: now check the data entered is within 5% of the latest FX rate in the database |
| 3: LastestFXRate = GetLatestFXRateInDatabase |
| 4: If ([USD amount] / [GBP Amount]) > LastestFXRate * 1.05 then |
| 5: Save the state of the values of LastestFXRate, [USD amount] and [GBP Amount] to accessible memory location) |
| 6: ShowWebpage("Ask the user to verify that it is ok to use a FX rate that is greater than 105% of the latest FX rate. Press OK to continue or Cancel to exit") |
| 7: Else |
| 8: FXTransactionSegmented1 |
| 9: END Subroutine |
| (When the User Responds to line 6 the FXTransactionSegmented1 Routine is called - note that this is now a new programming thread and no longer the continuation of the original paused thread) |
| 10: Subroutine FXTransactionSegmented1 |
| 11: Restore the state of the values of LastestFXRate, [USD amount] and [GBP Amount] and set CancelPressed |
| 12: If CancelPressed then EXIT |
| 13: If ([USD amount] / [GBP Amount]) < LastestFXRate * .95 then |
| 14: Save the state of the values of [USD amount] and [GBP Amount] to accessible memory location |
| 15: ShowWebpage("Ask the user to verify that it is ok to use a FX rate that is less than 95% of the latest FX rate. Press OK to continue or Cancel to exit") |
| 16: Else |
| 17: FXTransactionSegmented2 |
| 18: END Subroutine |
| (When the User responds to line 11 the FXTransactionSegmented2 Routine is called) |
| 19: Subroutine FXTransactionSegmented2 |
| 20: Restore the state of the values of [USD amount] and [GBP Amount] and set CancelPressed |
| 21: If CancelPressed then EXIT |
| 22: CreateFXTransaction([USD Amount], [GBP Amount]) |
| 23: END Subroutine |

The business processing now occurs at lines 4, 13 and 22. The tool has segmented FXTransaction into three subroutines. It also introduced state saving code so that the state of the application can be regenerated when the user responds by clicking "OK" or "Cancel". Now the application will execute to line 5 which saves the state of the application as session-level data. Line 6 will then immediately be executed to show the dialog and the subroutine will end. When the user eventually responds to the dialog shown on line 6, it will trigger the FXTransactionSegmented1 subroutine to be executed. Line 11 restores the state of the application and if the user pressed "Cancel" line 12 will exit out of the application as they would have happened on line 6 of the original desktop application. The variable CancelPressed in this situation is correctly filled with the user's choice, which was set when they clicked "OK" or "Cancel" on the dialog.

A very similar situation holds true when the tool segments the code for FXTransactionSegmented2. Note here that the tool analyses the subsequent code (lines 11 and below from the original desktop application) and notes that the variable LatestFXRate is not used. Thus, the value of LatestFXRate is not saved at line 14 or restored at line 20. Again at line 20, the application can access the user's choice as this is executed only when the user has selected "OK" or "Cancel" from the dialog. The user's choice is stored in the CancelPressed variable, and as in line 9 of the original desktop application, the web application exits on line 21 if the user presses the "Cancel" button.

The second example relates to Test 2, as described above. The example is broadly similar to the first example, in that it allows a user to perform an FX Trade, buying US Dollars with Sterling. However, in this example, the application validates the amount of Sterling that the user holds. If the application calculates that the user does not hold enough Sterling to perform the trade, it will prompt the user, informing them of the maximum US Dollar amount they can purchase with their available Sterling, with a request to enter a new US Dollar amount to purchase. The application will then continue processing using this new US Dollar amount.

Pseudocode for the original application is presented in Listing 3.

**Listing 3**

| |
|---|
| 1: ShowDesktopScreen("asks for a dollar amount to buy & sterling amount to sell. User presses OK to continue"). (Upon Pressing OK the FXTransaction Routine is called) |
| 2: Subroutine FXTransaction |
| 3: [GBP Holding] = GetCashBalance(Sterling) |
| 4: If [GBP Amount] > [GBP Holding] |
| 5: ShowDesktopScreen ("Tell the user that the maximum amount of sterling they can sell is [GBP Holding] and ask them to enter a new sterling amount.") |
| 6: [GBP Amount] = ShowDesktopScreen.NewGBPAmount |
| 7: ProcessFXTransaction([USD Amount], [GBP Amount]) |
| 8: END Subroutine |

The above code fails Test 2. Analysis performed by the tool determines that on line 6 there is used a value that the user entered onto the dialog that was shown on line 5. If the application does not wait for line 5 to return before continuing onto line 6, the NewGBPAmount variable will not be known and spurious calculations will be carried out. Thus the tool will segment the code at line 5. The segmented code is shown in Listing 4.

**Listing 4**

| |
|---|
| 1: ShowWebpage("asks for a dollar amount to buy & sterling amount to sell. User presses OK to continue"). (Upon Pressing OK the FXTransaction Routine is called) |
| 2: Subroutine FXTransaction |
| 3: [GBP Holding] = GetCashBalance(Sterling) |
| 4: If [GBP Amount] > [GBP Holding] |
| 5: Save the state of the values of [GBP Amount] and [USD Amount] to accessible memory location |
| 6: ShowWebPage("Tell the user that the maximum amount of sterling they can sell is [GBP Holding] and ask them to enter a new sterling amount.") |
| 7: Else |
| 8: FXTransactionSegmented |
| 9: END Subroutine |
| (When the User enters a new dollar amount and closes the dialog on line 8 the FXTransactionSegmented Routine is called - note that this is now a new programming thread and no longer the continuation of the original paused thread) |
| 10: Subroutine FXTransactionSegmented |
| 11: Restore the state of the values of [GBP Amount] and [USD Amount] and set the value of NewDollarAmount |
| 12: If [GBP Amount] > [GBP Holding] |
| 13: [GBP Amount] = NewGBPAmount |
| 14: ProcessFXTransaction([USD Amount], [GBP Amount]) |
| 15: END Subroutine |

The tool has segmented the code into two subroutines. In the new code, after the web page is shown on line 6, the application will save its state and stop executing that thread. A new thread will then start execution when the user enters a new Dollar amount and closes the dialog. This new thread begins execution at line 11 by restoring the state of the application before continuing. Note that line 12 has been inserted due to the "conditional code scenario" that existed in line 4 of the original code.

The third example relates to Test 3, as described above. In this example, a simple logon box is presented where a user is required to enter a username and password. The code associated with the logon box validates username and password that was entered, and sets up various internal global structures, such as a permissions list for the user.

**Listing 5**

| |
|---|
| (User double clicks the application to launch it) |
| 1: Subroutine Main |
| 2: ShowDesktopScreen ("Prompt the user for their username and password") |
| 3: If UserIsAdministrator |
| 4: ShowMessage("Welcome Admin") |
| 5: END Subroutine |
| 6: Subroutine ShowLogonScreen |
| 7: If Username = 'Admin' And Password = 'adminl23' |
| 8: UserIsAdmnistrator = True |
| 9: END Subroutine |

The code of Listing 5 fails Test 3. The analysis performed by the tool determines that, on line 8, a global variable is changed, and that this global variable is used on line 3. In the standard desktop application this is not a problem, as when the logon dialog is shown to the user on line 2, the application will wait for the user to enter their username and password before continuing execution to line 3. However on the web version, line 3 would be executed before the global variable has been initialised, which will cause the application to crash. Thus the tool segments the Main subroutine at line 2. The ShowLogonScreen routine remains unchanged.

**Listing 6**

| |
|---|
| 1: Subroutine Main |
| 2: ShowWebPage("Prompt the user for their username and password") |
| 3: END Subroutine (Upon Pressing OK the FollowingLogon Routine is called) |
| 4: Subroutine FollowingLogon |
| 5: If UserIsAdministrator |
| 6: ShowMessage("Welcome Admin") |
| 7: END Subroutine |

The tool has segmented the Main subroutine in two, adding a new routine named FollowingLogon. The FollowingLogon routine will be called after the user has entered their username and password and the code in the ShowLogonScreen routine has exited: by that time, the permission structure has been set up correctly. This means that when line 5 in the amended code is executed, the permission structure will have been initialised. Note that there is no state-saving and reloading in this example. It is not necessary to do this here as only globally-scoped variables are involved, and they will be maintained internally by the application itself.

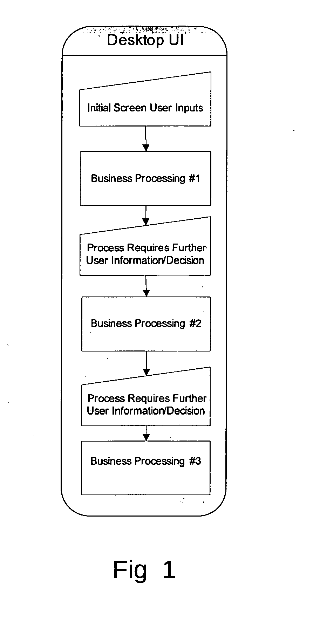

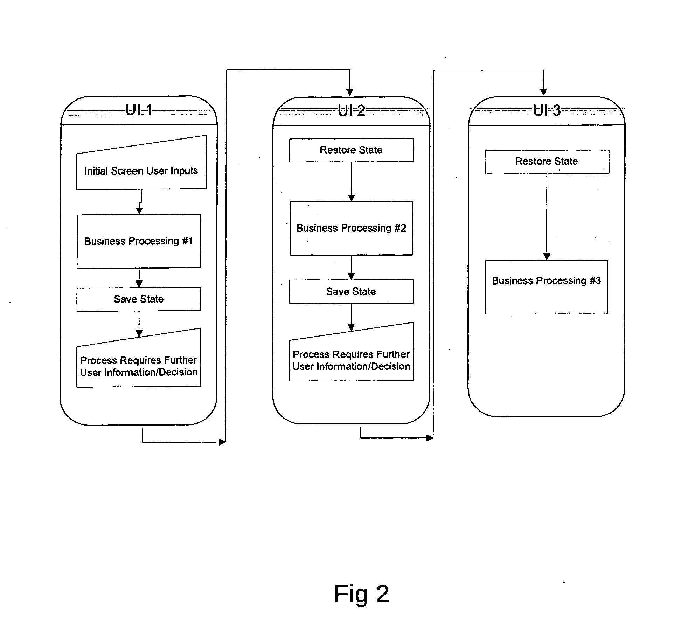

The process of segmentation is illustrated in Figures 1 and 2. Figure 1 illustrates, in the form of a flowchart, the normal, sequential processing that might take place in a desktop application where single, three-step process is carried out, at each step, input is requested from a user and that input is subsequently processed in the business logic of the application. Each time information is requested, a modal dialog is displayed, which blocks execution of the application until the user enters the required data and closes the dialog.

In comparison, the operation of the web application as illustrated in Figure 2 uses three process that are executed one after the other, each process operating to create one dialog and to preserve the state of the application. Once the dialog is closed, control is passed to the next process, which restores the saved program state before displaying a further dialogue, if required, and processing data received from a user.

### The Shared Memory Problem

Legacy desktop applications are single-instance, single-user, meaning that there is only one user connecting to the application at any one time. The programmer can therefore be sure that any data values held in the computer's memory for the application relate to the user that is using the system. For example, when a user changes the default printer, in a desktop word processor application, it only affects the setting for that user. In a port of the word processor to a web interface, when a user changes the default printer, that change should not affect an other user who is accessing the application.

Therefore, there is an assurance for the legacy code that global data has not been modified outside of any particular user's session. This is not the case for web applications since there might be millions of users connecting to the application at any time. If any of these users have the ability to modify global data, this immediately impacts upon all other users in the system.

One solution to this problem might be to make any global variable immutable. However, this would change the functionality of the application. It is not possible to programmatically determine whether a writable global variable should be changeable in the normal course of running the application, and preventing change in this manner for all global variables will inevitably break parts of the functionality of the application. The only reliable solution that maintains the original function of the application is to move these global variables from being global at the application level, to being global at a user session level. Therefore, the solution to this problem can be achieved by introducing a session level for every user that connects to the application and abstracting global variables to this session level.

To solve the shared-memory problem, the tool embodying the invention carries out three steps:
(1) it creates a session-level identifier,
(2) it creates a collection of global variables, and
(3) it changes the code to access the correct global variable within the collection.

To create a session-level identifier, at the entry point to the application (that is, at the source code which is executed first), the tool inserts source-code to create a session-level variable.

The tool will examine the source code and compile a list of any globally-scoped, in-memory data items, including, but not limited to, variables and class properties. These need to be segregated such that each connecting user has a unique set of the data items. So for each globally-scoped data item, the source code is changed to create a collection of like data items, with one such data item being associated with a corresponding user session. At the entry point to the application, the tool changes the source code to add a new set of data items for each new session that is created. In effect, each global variable is replaced with an array of variables each of the same type as the original global variable, the array being indexed by a user session identifier.

Within the collection of global parameters, the tool also creates a new event that records the time when the session last accessed a data-item. If the time since the "last accessed" time is greater than a specified number of seconds (that time can be a user-configurable option within the settings of the tool) then the session will be deemed to have expired and the user will have to login once more to create a new session variable.

Now that the source code contains a collection of the data items for each current session, the source code is altered such that at each point in the desktop application where a data item is accessed, the corresponding code of the web application accesses the data item for the appropriate session within the collection.

Consider the list of global variable declaration shown in Listing 7.

**Listing 7**

| |
|---|
| int i |
| int j |
| char *name |
| FILE *f |
| char letters[26] |

The equivalent declarations for a web application capable of supporting a maximum of MAXUSERS might take the form of the code shown in Listing 8.

**Listing 8**

| |
|---|
| int i[MAXUSERS] |
| int j[MAXUSERS] |
| char *name [MAXUSERS] |
| FILE *f[MAXUSERS] |
| char letters [MAXUSERS] [26] |

Then, assuming that there is a vaue usersession assigned to a given user session when a user logs into the application, where 0 < = usersession < MAXUSERS, then each occurrence of a reference to a global variable in the source code can be modified to use the value usersession as an index. Thus, a statement such a j=1 becomes j[usersession]=1.

### Components Used Problem

A problem encountered in converting a desktop application to a web application are the differences between a desktop-based user interface and the user interface inside a web browser. Desktop applications typically make use of a rich set of controls coming from, in the case of the Microsoft Windows Application, the raw Win32 or Win64 API. A web application has to make use of a comparatively limited set of controls offered by HTML: many controls from the desktop have no analogous counterpart on the web.

It is possible to construct new web controls from the base HTML functionality. Although this can involve intensive client-side scripting in the browser using JavaScript, and asynchronous interaction with the server using AJAX, it is possible to mimic the behaviour of most desktop controls by creating new web controls.

The tool has a supplied conversion matrix stored in a database. This is preferable because new and more closely aligned conversions of components from the desktop to the web may appear in the future as web browsers and desktop GUI APIs develop over time. Also, there may be different conversion matrices provided that may be more suitable for a given deployment for the following reasons:
1. a given matrix may provide an enhanced user experience,
2. there may be licensing problems that prevent use of a particular UI component for certain users of applications; or
3. a particular matrix may have wider browser compatibility.

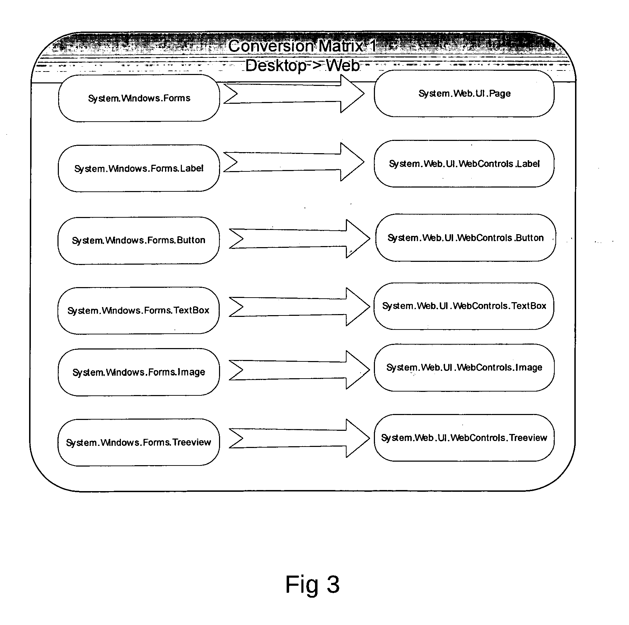

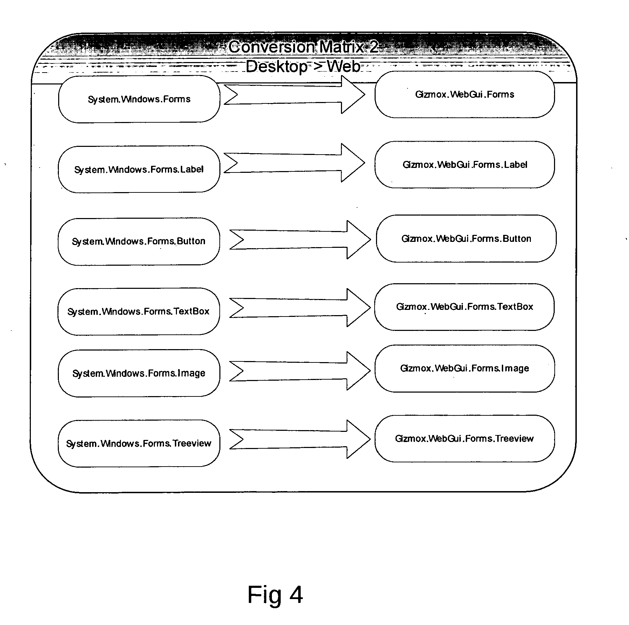

Examples of what a part of two alternative conversion matrices might contain for two different scenarios are shown in Figures 3 and 4. In each case, the left-hand column of the matrix identities code elements that might be found in user interface code of a desktop application, and the right-hand column specified the corresponding elements that are to be included in the code for an equivalent web application.

In order to convert the UI code, the tool examines the code for any use of the desktop UI components contained in the matrix. If there are desktop UI components used that are not contained in the matrix, the tool alters those UI components so that they are inaccessible to a user of the web application.

The tool creates a new web page for each user form (i.e., for each screen in the desktop application) that is to be included in the web application. Then the tool parses the code, examining each component contained on the user form and adds the equivalent component (as defined by the matrix) in the same location on the new web page.

In circumstances where it is known that there is no direct mapping of a UI component, the tool inserts code required to ensure that the behaviour of the new UI component is compatible with the desktop component. For example, the Win32 desktop component system.windows.label has characteristics that are different from the web equivalent system.web.ui.label, and these differences must be accommodated in the source code that is generated by the tool.

MICROSOFT and WINDOWS are registered trade marks of Microsoft Corporation.

JAVASCRIPT is a registered trade mark of Sun Microsystems, Inc.

## Claims

1. A tool for re-engineering computer source code comprising: a code analysis engine that is operative to analyse the source code of a desktop application and identify features within the code, and a code generation engine operative to generate code for a web application that implements functionality equivalent to that of the desktop application, wherein the analysis engine is operative to identify UI code that creates a blocking interaction with a user and the code generation engine operates to equivalent create code segmented into two code blocks, a first code block being operative to create an input UI object and the second block being operative to continue program execution following user interaction with the UI object.

2. A tool for re-engineering computer source code according to claim 1 in which the first code block includes code that preserves the execution state of the application and the second code block includes code that restores the preserved state of the application.

3. A tool for re-engineering computer source code according to claim 1 or claim 2 in which the analysis engine applies, in order, plurality of tests to the code, and the operation of the code generation engine is modified in accordance with the results of the tests.

4. A tool for re-engineering computer source code according to any preceding claim in which the analysis engine operates to determine whether the UI code that creates a blocking interaction with is executed conditionally, and, if required, causes the code generation engine to create conditionally executed code in the first and second code blocks as required to maintain the functionality of the application.

5. A tool for re-engineering computer source code according to any preceding claim in which the analysis engine analyses the code recursively.
